# EUROPÄISCHE PATENTSCHRIFT

(11) **EP 3 873 761 B1**
(45) Veröffentlichungstag und Bekanntmachung des Hinweises auf die Patenterteilung: **01.05.2024**
(21) Anmeldenummer: 19797603.8
(22) Anmeldetag: 25.10.2019
(51) Int. Cl.: B60L 3/00, B60L 3/04, B60L 3/12, H02H 3/14

(54) **BERÜHRUNGSSICHERHEIT FÜR FUNKENTSTÖRTE SPANNUNGSWANDLER IN EINEM POTENTIALFREIEN GLEICHSPANNUNGSNETZ**
CONTACT SAFETY FOR RADIO-SUPPRESSED VOLTAGE CONVERTER IN A POTENTIAL-FREE DC VOLTAGE NETWORK
SECURITÉ TACTILE POUR UN CONVERTISSEUR DE TENSION ANTIPARASITÉ DANS UN RÉSEAU ÉLECTRIQUE CC LIBRE DE POTENTIEL

(30) Priorität: 29.10.2018 DE 102018218449
(43) Veröffentlichungstag der Anmeldung: 08.09.2021
(73) Patentinhaber: Robert Bosch GmbH, 70442 Stuttgart (DE)
(72) Erfinder: GASE, Stephan, 75233 Tiefenbronn (DE); FACKLER, Rupert, 74385 Pleidelsheim (DE); WINTER, Arnold, 70794 Filderstadt (DE); LAUERSDORF, Martin, 75438 Knittlingen (DE); HAAS, Axel, 71720 Oberstenfeld (DE); MAUR, Marcel, 71679 Asperg (DE)
(86) Internationale Anmeldenummer: PCT/EP2019/079124
(87) Internationale Veröffentlichungsnummer: WO 2020/089047

(56) Entgegenhaltungen:
- EP-A1- 3 375 655
- DE-A1- 3 534 861
- DE-A1-102017 202 236
- DE-A1-102017 220 982
- DE-A1-102018 002 926
- DE-B3-102017 205 861
- US-A1- 2015 256 116

## Beschreibung

Die vorliegende Erfindung betrifft Spannungswandler, die beispielsweise in elektrisch angetriebenen Fahrzeugen eingesetzt werden können und mit einem oder mehreren Kondensatoren funkentstört sind.

### Stand der Technik

Elektromotoren im Antriebsstrang elektrisch angetriebener Fahrzeuge werden in der Regel mit einer mehrphasigen Wechselspannung gespeist. Die elektrische Energie wird an Bord des Fahrzeugs von Batterien, Brennstoffzellen oder anderen Energiequellen meist als Gleichspannung zur Verfügung gestellt. Die mehrphasige Wechselspannung wird aus dieser Gleichspannung mit einem Inverter erzeugt. Dazu werden die Phasen der Wechselspannungsversorgung für den Elektromotor in schneller zeitlicher Taktung wechselweise mit dem Pluspol und dem Minuspol der Gleichspannungsquelle verbunden. Dies wird über eine Anordnung aus Schaltelementen in dem Inverter realisiert.

Durch die zeitliche Taktung ist die Wechselspannung mit hochfrequenten Störungen beaufschlagt, die zwar den Betrieb des Elektromotors nicht behindern, aber über die Verbindung des Elektromotors mit der Fahrzeugmasse in metallische Strukturen des Fahrzeugs eingekoppelt werden. Die metallische Strukturen können dann wie Sendeantennen wirken und die Störungen in die Umgebung abstrahlen, was nicht vereinbar mit den Anforderungen an die elektromagnetische Verträglichkeit (EMV) ist. Eine Möglichkeit, die Störungen zu unterdrücken, besteht darin, das den Inverter speisende Gleichspannungsnetz über sogenannte Y-Kondensatoren mit der Fahrzeugmasse zu verbinden.

Da die Zwischenkreisspannung typischerweise mehrere hundert Volt beträgt und somit für Menschen bei Berührung gefährlich ist, gibt es regulatorische Vorgaben dahingehend, wieviel Energie maximal kapazitiv im Gleichspannungsnetz gespeichert werden darf. Die EP 2 763 868 B1 schlägt darüber hinaus vor, Kondensatoren des Zwischenkreises bei bestimmten Ereignissen, insbesondere bei Unfällen, kontrolliert zu entladen.

Aus der EP 3 375 655 A1 ist eine Technik zur Bestimmung von Isolationswiderständen in einem Kraftfahrzeug bekannt. Aus der DE 10 2018 002 926 A1 ein elektrisches Bordnetz für ein Kraftfahrzeug mit einem y-Kondensator bekannt. Die Druckschriften DE 10 2017 202236 A1 und DE 35 34 861 A1 offenbaren Spannungswandler und Schalteranordnungen.

### Offenbarung der Erfindung

Die Erfindung ist definiert in den angehängten Ansprüchen.

Im Rahmen der Erfindung wurde ein Spannungswandler zur Wandlung zwischen einer Gleichspannung an einem Gleichspannungstor und einer ein- oder mehrphasigen Wechselspannung an einem Wechselspannungstor entwickelt. Die Wandlung geschieht durch zeitliche Taktung eines elektronischen Schaltwerks, über das jede Phase des Wechselspannungstors wahlweise mit dem Pluspol oder mit dem Minuspol des Gleichspannungstors verbindbar ist. Der Pluspol, und/oder der Minuspol, des Gleichspannungstors ist über mindestens einen Kondensator mit einem Masseanschluss verbunden, der wiederum mit einer externen Masse, wie beispielsweise einer Fahrzeugmasse eines elektrisch angetriebenen Fahrzeugs, verbindbar ist. Die Verbindung zwischen dem Kondensator und dem Masseanschluss ist über mindestens ein Schaltelement geführt.

Es wurde erkannt, dass speziell bei der Verwendung des Spannungswandlers in einem Fahrzeug das Gefahrenpotential der im Kondensator gespeicherten Energie drastisch reduziert wird, wenn der Kondensator durch das Schaltelement von der Fahrzeugmasse getrennt ist.

Ist ein Pol des Kondensators mit der Fahrzeugmasse verbunden, wird dadurch die Potentialfreiheit des Gleichspannungsnetzes aufgehoben. Eine auf Erdpotential stehende Person muss also nur noch den Pol des Gleichspannungsnetzes berühren, an dem der Kondensator angeschlossen ist, um den Stromkreis zu schließen und einen elektrischen Schlag zu erhalten. Wenn beide Pole des Gleichspannungstors (und damit des Gleichspannungsnetzes) jeweils über einen Kondensator mit der Fahrzeugmasse verbunden sind, ist es gleichgültig, welcher dieser Pole berührt wird.

Ist hingegen die Verbindung zwischen dem Kondensator und der Fahrzeugmasse getrennt, so ist ein Pol des Kondensators für einen Menschen, der das Fahrzeug normal bedient und beispielsweise zum Aufladen der Traktionsbatterie an einem Ladeanschluss hantiert, nicht mehr zugänglich. In Kontakt mit beiden Polen des Kondensators könnte nur derjenige kommen, der das Gehäuse des Spannungswandlers unbefugt öffnet unter Missachtung der angebrachten Warnungen, dass das Gerät auch nach dem Abkoppeln vom Gleichspannungsnetz des Fahrzeugs noch gespeicherte Energie enthält.

Somit fällt der solchermaßen abgeschaltete Kondensator aus der Bilanz der möglicherweise für Menschen gefährlichen Energie vollkommen heraus. Dies ist insbesondere in Situationen von Vorteil, in denen das Fahrzeug an einer Ladestation angeschlossen ist, denn in diesem Moment wird auch in den Ladekabeln und in der Ladestation selbst Energie gespeichert, und für die Beurteilung der Gefährlichkeit kommt es auf die insgesamt, d.h. in Fahrzeug, Kabeln und Ladestation, gespeicherte Energie an.

Es mag auf den ersten Blick widersinnig erscheinen, ausgerechnet einen Kondensator, der einem so wichtigen Zweck wie der Funkentstörung dient, seiner Funktion zu berauben. Die Erfinder haben erkannt, dass die aus dem Spannungswandler auf das Wechselspannungstor aufgeprägten Störungen nur dann zur Abstrahlung kommen, wenn der Elektromotor aktiv ist und die Störungen somit zur Fahrzeugmasse gelangen können. Dies ist aber zugleich der Zustand, in dem das Fahrzeug in Bewegung ist und von Menschen außerhalb des Fahrzeugs nicht berührt werden kann. Wenn das Fahrzeug hingegen steht und berührt werden kann, ist der Elektromotor nicht aktiv, und die Wirkung der Entstörkondensatoren wird nicht benötigt.

Anders als beim Entladen des Kondensators gibt es beim Wegschalten mit dem Schaltelement keinen Zielkonflikt zwischen einem hohen Isolationswiderstand einerseits und einem niedrigen Entladewiderstand andererseits, und das Wegschalten funktioniert unabhängig von der Kapazität des Kondensators. Somit fällt die bisherige sicherheitstechnische Begrenzung der Kapazität vollständig weg. Es gibt also auch keinen Zielkonflikt mehr zwischen guter Entstörwirkung, für die eine hohe Kapazität vorteilhaft ist, und Personenschutz, für den eine geringe Kapazität besser ist. Es können Kondensatoren mit größerer, bislang nicht zulässiger Kapazität eingesetzt werden. Abgesehen von der besseren Entstörwirkung haben diese Kondensatoren zum Teil deutliche Vorteile in Bezug auf den erforderlichen Bauraum im Vergleich zu den bislang eingesetzten toroidförmigen Kondensatoren mit geringerer Kapazität.

Somit weist in einer vorteilhaften Ausgestaltung der Kondensator eine Kapazität von mindestens 500 nF, bevorzugt von mindestens 1 µF und ganz besonders bevorzugt von mindestens 10 µF auf. Die konkret zu wählende Kapazität wird durch die zu filternde Frequenz gegeben.

In einer weiteren besonders vorteilhaften Ausgestaltung ist der Spannungswandler dazu ausgebildet, mit dem Schaltelement die Verbindung zwischen dem Kondensator und dem Masseanschluss zu unterbrechen, wenn auf den Spannungswandler eine Beschleunigungs- oder Verzögerungskraft wirkt, die einen vorgegebenen Schwellwert überschreitet. Eine solche Beschleunigungs- oder Verzögerungskraft kann beispielsweise bei einem Unfall wirken. Nach einem Unfall ist es besonders wichtig, das Fahrzeug berührsicher zu machen, damit Rettungskräfte bei den Rettungsarbeiten nicht gefährdet werden.

Beispielsweise kann der Spannungswandler mit einem Beschleunigungssensor gekoppelt sein und in Antwort darauf, dass eine hohe Beschleunigung registriert wurde, das Schaltelement ansteuern. Es kann aber auch beispielsweise das Schaltelement selbst dazu ausgebildet sein, bei hohen Beschleunigungskräften die Verbindung des Kondensators zum Masseanschluss zu unterbrechen. Hierzu kann beispielsweise eine Sollbruchstelle vorgesehen sein, die bei der Krafteinwirkung zerstört wird. Die Verbindung wird also auch dann zwangsläufig unterbrochen, wenn keine Steuergeräte oder Mikrocontroller des Fahrzeugs mehr funktionsfähig sind.

In einer weiteren besonders vorteilhaften Ausgestaltung ist der Spannungswandler dazu ausgebildet, mit dem Schaltelement die Verbindung zwischen dem Kondensator und dem Masseanschluss herzustellen, wenn ein an das Wechselspannungstor des Spannungswandlers angeschlossener Verbraucher aktiviert wird, und die Verbindung wieder zu trennen, wenn der Verbraucher deaktiviert wird. Wie zuvor beschrieben, werden beispielsweise bei der Anwendung des Spannungswandlers in einem Fahrzeug Funkstörungen nur dann abgestrahlt, wenn der mit dem Spannungswandler versorgte Motor aktiv ist. Wenn der Motor nicht aktiv ist, steht das Fahrzeug. Indem nun in diesem Zustand die Verbindung zum Masseanschluss getrennt wird, ist immer dann, wenn das Fahrzeug prinzipiell für Menschen außerhalb des Fahrzeugs berührbar ist, maximale Berührsicherheit gegeben.

Für das reversible Schalten ist prinzipiell jeder reversible elektrische Schalter geeignet, so auch beispielsweise ein elektromechanisches Relais. Eine höhere Zuverlässigkeit und Verschleißfestigkeit insbesondere bei sehr häufigen Schaltvorgängen kann mit Halbleiterschaltern erreicht werden. Daher umfasst das Schaltelement in einer weiteren besonders vorteilhaften Ausgestaltung eine Anordnung aus mindestens zwei Transistoren, wobei die Transistoren Bipolartransistoren und/oder Feldeffekttransistoren umfassen und wobei die durch die jeweilige Kollektor-Emitter-Strecke, bzw. durch die jeweilige Source-Drain-Strecke, definierten Durchlassrichtungen der Transistoren antiseriell zueinander geschaltet sind. Die antiserielle Schaltung wird benötigt, da eine Kollektor-Emitter-Strecke, bzw. eine Source-Drain-Strecke, nur Spannungen einer Polarität blockieren kann und die Polarität, mit der der Kondensator aufgeladen ist, nicht von vornherein feststeht.

In einer weiteren besonders vorteilhaften Ausgestaltung ist die Verbindung zwischen dem Kondensator und dem Masseanschluss über eine Reihenschaltung aus mehreren Schaltelementen geführt. Sollte ein Schaltelement funktionsunfähig sein und die Verbindung nicht mehr unterbrechen können, so kann das andere Schaltelement diese Funktion übernehmen. Der Personenschutz ist also nach wie vor gewährleistet, so dass es bei der Fehlfunktion eines Schalters also beispielsweise nach wie vor zulässig ist, ein Fahrzeug mit dem Spannungswandler an einer Ladestation aufzuladen.

Wäre die Verbindung zwischen dem Kondensator und dem Masseanschluss nicht mehr unterbrechbar und wäre bei der Verbindung mit einer Ladestation die höchstzulässige Kapazität überschritten, müsste die Ladefunktion des Fahrzeugs aus Sicherheitsgründen gesperrt werden. Die Reichweite des Fahrzeugs wäre dann durch den aktuell vorhandenen Energievorrat begrenzt.

Wenn hingegen ein Schalter dahingehend versagt, dass die Verbindung des Kondensators zum Masseanschluss nicht mehr herstellbar ist, so ist dies für Menschen nicht unmittelbar gefährlich, sondern es wird lediglich die Funkentstörung durch den Kondensator wirkungslos. Auch dieser Zustand sollte zeitnah behoben werden, er ist jedoch nicht so kritisch, dass die Weiterfahrt sofort unterbunden werden und ein teurer Pannendienst in Anspruch genommen werden muss.

In der Erfindung sind Diagnosemittel vorgesehen, die dazu ausgebildet sind, die korrekte Funktion, und/oder den tatsächlichen Schaltzustand, mindestens eines Schaltelements zu erfassen. Zum einen kann auf Grund der sicherheitsrelevanten Funktion des Schaltelements eine regulatorische Verpflichtung entstehen, das Schaltelement diagnosefähig zu machen. Zum anderen ist der Zustand, in dem die Verbindung zwischen dem Kondensator und dem Masseanschluss dauerhaft unterbrochen ist, im Hinblick auf die elektromagnetische Verträglichkeit (EMV) unerwünscht. Gerade beim Einsatz des Spannungswandlers in einem Fahrzeug wird das Fahrzeug ohne wirksame Funkentstörung zu einer nur schwer ortbaren, weil nur sporadisch aktiven und gleichzeitig mobilen, Quelle für breitbandige Funkstörungen. Da sich diese Störungen nicht unmittelbar auf das Fahrverhalten des Fahrzeugs auswirken, bleibt die Fehlfunktion für den Fahrer ohne Diagnosemittel zunächst unbemerkt, bis die Bundesnetzagentur das Fahrzeug als Störquelle ermittelt hat und entsprechende Folgekosten anfallen.

In einer weiteren besonders vorteilhaften Ausgestaltung ist mindestens ein Schaltelement als Umschalter zwischen einer ersten Schaltstellung und einer zweiten Schaltstellung ausgebildet. Das Schaltelement verbindet den Masseanschluss, oder ein zwischen dieses Schaltelement und den Masseanschluss geschaltetes weiteres Schaltelement, in der ersten Schaltstellung mit einer Spannungsquelle für ein Testpotential und in der zweiten Schaltstellung mit dem Kondensator. Die Diagnosemittel umfassen Mittel zur Überwachung des Testpotentials. Es kann dann beispielsweise bei Inbetriebnahme des Spannungswandlers, und/oder wiederkehrend während des Betriebes, ein Testprogramm gefahren werden, in dem Kombinationen der Schaltstellungen vorhandener Schaltelemente eingestellt werden und Messungen der Testpotentiale mit den zu erwartenden Werten verglichen werden.

Die Diagnosemittel umfassen eine Spannungsquelle, die mit der dem Masseanschluss abgewandten Seite mindestens eines Schaltelements verbunden ist, und Mittel zur Überwachung des Potentials auf dieser Seite des Schaltelements. Die Erfindung setzt nicht voraus, dass das Schaltelement ein Umschalter ist, sondern funktioniert auch mit Schaltelementen, die die Verbindung zwischen dem Kondensator und dem Masseanschluss nur entweder verbinden oder trennen können, wie beispielsweise die zuvor beschriebenen Anordnungen aus Transistoren.

Wie zuvor beschrieben, ist eine wesentliche Anwendung des Spannungswandlers die Versorgung eines Elektromotors in einem elektrisch angetriebenen Fahrzeug. Daher bezieht sich die Erfindung auch auf einen elektrischen Antriebsstrang für ein Kraftfahrzeug mit dem beschriebenen Spannungswandler sowie einem mit dem Wechselspannungstor des Spannungswandlers verbundenem Elektromotor.

Weiterhin bezieht sich die Erfindung auch auf ein Kraftfahrzeug mit diesem Antriebsstrang, wobei der Elektromotor und der Masseanschluss des Spannungswandlers mit einer gemeinsamen Masse des Kraftfahrzeugs verbunden sind. Auf diese Weise werden die aus dem Spannungswandler in den Elektromotor und von dort in die Masse des Kraftfahrzeugs eingekoppelten Störungen

Der Strompfad von dem Punkt, an dem der Elektromotor mit der Masse des Kraftfahrzeugs verbunden ist, bis zu dem Punkt, an dem der Masseanschluss des Spannungswandlers mit der Masse des Kraftfahrzeugs verbunden ist, sollte eine möglichst geringe Fläche aufspannen. Auf diese Weise wird die Länge der für die Abstrahlung von Störungen wirksamen Antenne, und somit der Wirkungsgrad für diese Abstrahlung, deutlich vermindert.

In einer weiteren vorteilhaften Ausgestaltung umfasst das Kraftfahrzeug eine wiederaufladbare Batterie zur Speisung des Antriebsstrangs sowie eine Sicherheitseinrichtung, die dazu ausgebildet ist, in Antwort auf eine Feststellung durch Diagnosemittel des Spannungswandlers, dass auf Grund einer Fehlfunktion eines oder mehrerer Schaltelemente die Verbindung zwischen dem Kondensator und dem Masseanschluss des Spannungswandlers nicht unterbrochen werden kann, das Aufladen der Batterie aus einer fahrzeugexternen Energiequelle zu unterbinden. Auf diese Weise werden Situationen, in denen durch den Anschluss der fahrzeugexternen Energiequelle die insgesamt kapazitiv gespeicherte Energie einen kritischen Wert überschreitet, vorteilhaft vermieden. Zugleich wird der Fahrer unter Reparaturzwang gesetzt, da das Fahrzeug in dem potentiell unsicheren Zustand nur noch nutzbar ist, soweit der in der Batterie aktuell vorhandene Energievorrat reicht.

In einer weiteren vorteilhaften Ausgestaltung umfasst das Kraftfahrzeug eine Sicherheitseinrichtung, die dazu ausgebildet ist, in Antwort auf eine Feststellung durch Diagnosemittel des Spannungswandlers, dass auf Grund einer Fehlfunktion eines oder mehrerer Schaltelemente die Verbindung zwischen dem Kondensator und dem Masseanschluss des Spannungswandlers nicht hergestellt werden kann, eine Warnung an den Fahrer auszugeben und nach Ablauf einer vorgegebenen Fahrstrecke oder Zeit eine erneute Inbetriebnahme des Kraftfahrzeugs zu unterbinden, und/oder die Drehzahl und/oder das Drehmoment des Elektromotors einzuschränken. Wie zuvor beschrieben, ist eine ständig unterbrochene Verbindung nicht akut gefährlich, führt aber dazu, dass das Fahrzeug den Anforderungen in Bezug auf die elektromagnetische Verträglichkeit (EMV) nicht mehr genügt. Da die Erfüllung dieser Anforderungen eine Voraussetzung für die Zulassung des Fahrzeugs ist und der Fahrer generell für den technisch einwandfreien Zustand seines Fahrzeugs verantwortlich ist, ist es angebracht, den Fahrer auch in dieser Fehlersituation unter Reparaturzwang zu setzen.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Beispielhafte schematische Darstellung eines Spannungswandlers 1 in einem Antriebsstrang 10, der in einem Kraftfahrzeug 100 verbaut ist;
Figur 2 Beispielhafte schematische Detailansicht von Schaltelementen 6a, 6b, die als Umschalter ausgebildet sind, und zugehörigen Diagnosemitteln 8;
Figur 3 Beispielhafte schematische Detailansicht transistorierter Schaltelemente 6a, 6b und zugehöriger Diagnosemittel 8.

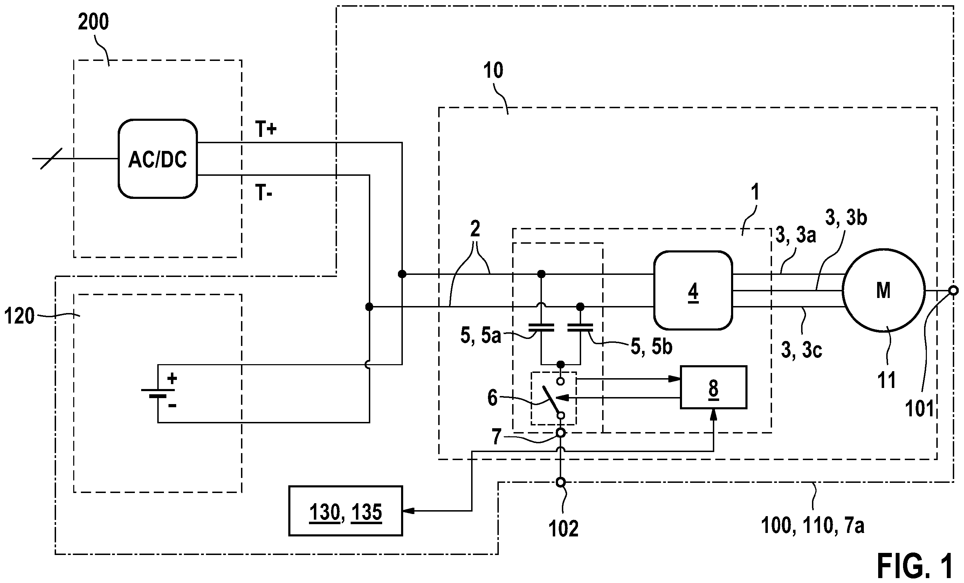

Nach Figur 1 dient der Spannungswandler 1 im Antriebsstrang 10 des Kraftfahrzeugs 100 dazu, eine an seinem Gleichspannungstor 2 anliegende Gleichspannung in eine dreiphasige Wechselspannung zu wandeln, die an den drei Phasen 3a, 3b, 3c seines Wechselspannungstors 3 ausgegeben wird. Mit dieser Wechselspannung wird der Elektromotor 11 im Antriebsstrang 10 gespeist. Die Wandlung geschieht durch zeitliche Taktung eines elektronischen Schaltwerks 4, das nicht weiter im Detail dargestellt ist.

Durch die zeitliche Taktung im Schaltwerk 4 wird die Wechselspannung mit hochfrequenten Störungen beaufschlagt. Da der Elektromotor 11 am Punkt 101 mit der Masse 110 des Kraftfahrzeugs 100 verbunden ist, koppeln diese Störungen in metallische Teile des Kraftfahrzeugs 100. Diese metallischen Teile wirken als Antennen, die die hochfrequenten Störungen abstrahlen. Daher ist der Pol T+ des Gleichspannungstors 2 über den Kondensator 5a mit dem Masseanschluss 7 des Spannungswandlers 1 verbunden. Der Pol T- des Gleichspannungstors 2 ist über den Kondensator 5b mit dem Masseanschluss 7 des Spannungswandlers 1 verbunden. Diese Verbindungen sind über das Schaltelement 6 geführt. Der Masseanschluss 7 ist am Punkt 102 mit der Masse 110 des Kraftfahrzeugs 100 als externer Masse 7a verbunden.

Innerhalb des Antriebsstrangs 10 können auch mehrere Kapazitäten auf einem gemeinsamen Massepotential zusammengefasst sein, das seinerseits mit der Masse 110 des Kraftfahrzeugs 100 verbunden ist. Dies ist beispielsweise dann besonders einfach in das Kraftfahrzeug 100 einbaubar, wenn der Antriebsstrang 10 eine geschlossene Baugruppe ist, die im Ganzen in das Kraftfahrzeug 100 integriert wird.

Wenn das Schaltelement 6 auf Durchgang geschaltet ist, werden die hochfrequenten Störungen aus der Fahrzeugmasse 110 zurück in den Spannungswandler 1 gezogen und insofern kurzgeschlossen. Auf diese Weise wird die Abstrahlung dieser Störungen in die Umgebung deutlich vermindert. Allerdings ist in diesem Zustand die Fahrzeugmasse 110 mit je einem Pol jedes der beiden Kondensatoren 5a, 5b verbunden. Beim Hantieren an dem Fahrzeug 100 reicht dann eine Berührung nur eines der beiden Pole T+, T- des Gleichspannungstors 2, um einen elektrischen Schlag aus der in einem der Kondensatoren 5a, 5b gespeicherten Energie zu erhalten.

Daher wird vorteilhaft dann, wenn der Elektromotor 11 nicht aktiv ist und die Funkentstörung durch die Kondensatoren 5a und 5b nicht benötigt wird, das Schaltelement 6 auf Unterbrechung geschaltet. Der jeweils mit dem Schaltelement 6 verbundene Pol jedes der beiden Kondensatoren 5a, 5b ist dann für Menschen nicht mehr zugänglich, so dass die Kapazitäten dieser Kondensatoren 5a, 5b kein Gefährdungspotential mehr darstellen.

Dies ist insbesondere dann wichtig, wenn die Traktionsbatterie 120 des Kraftfahrzeugs 120 aus einer externen Ladestation 200 geladen wird, weil die Ladestation 200 und die Kabelverbindung zum Kraftfahrzeug 100 weitere Kapazitäten einbringen.

Zur Überwachung dieser sicherheitsrelevanten Funktion sind Diagnosemittel 8 vorgesehen. Es können zwei Arten von Fehlfunktionen auftreten.

Zum einen kann das Schaltelement 6 in der Schaltstellung auf Durchgang festhängen, was zur Folge hat, dass die Verbindung zwischen den Kondensatoren 5a, 5b und dem Masseanschluss 7 nicht mehr unterbrochen werden kann. Insbesondere beim Aufladen der Traktionsbatterie 120 aus der Ladestation 200 bestünde dann Stromschlaggefahr. Daher wird in diesem Fall durch die Sicherheitseinrichtung 130 das Aufladen unterbunden. Der Fahrer des Fahrzeugs 100 muss mit dem in der Batterie 120 verbleibenden Energievorrat auskommen und eine Werkstatt aufsuchen.

Zum anderen kann das Schaltelement 6 in der Schaltstellung auf Unterbrechung festhängen. In diesem Fall ist das Fahrzeug 100 immer berührsicher, doch fehlt die Funkentstörung. Daher wird in diesem Fall durch die Sicherheitseinrichtung 135 eine Warnung an den Fahrer ausgegeben. Wird der Fehler innerhalb einer vorgegebenen Fahrstrecke oder Zeit nicht behoben, wird eine erneute Inbetriebnahme des Fahrzeugs 100 unterbunden. Es besteht also auch bei diesem Fehler Reparaturzwang. Statt die erneute Inbetriebnahme des Fahrzeugs 100 komplett zu unterbinden, kann auch lediglich die Drehzahl und/oder das Drehmoment des Elektromotors 11 eingeschränkt werden, damit das Fahrzeug 100 zumindest noch aus eigener Kraft eine Werkstatt erreichen kann ("Limphome-Funktion").

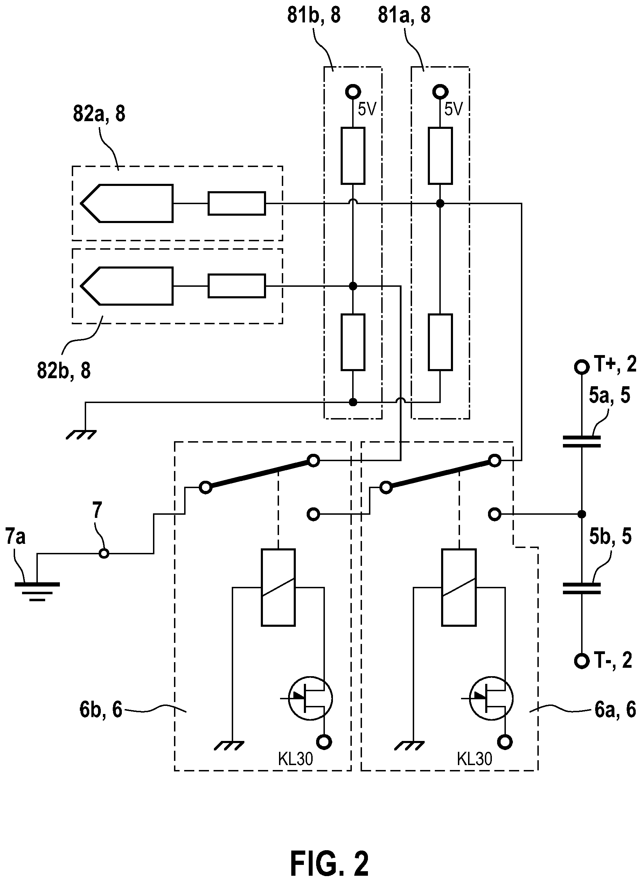

Um die Wahrscheinlichkeit zu vermindern, dass auf Grund eines Fehlers das Aufladen unterbunden werden muss, sind in dem in Figur 2 gezeigten Ausführungsbeispiel zwei Schaltelemente 6a und 6b in Reihe geschaltet. Die Schaltelemente 6a, 6b sind hier als Relais ausgebildet.

Das Schaltelement 6a verbindet in seiner in Figur 2 gezeigten Schaltstellung das zweite Schaltelement 6b mit der Spannungsquelle 81a für ein Testpotential. In seiner in Figur 2 nicht gezeigten Schaltstellung verbindet das Schaltelement 6a das zweite Schaltelement 6b mit den Kondensatoren 5a und 5b.

Das Schaltelement 6b verbindet in seiner in Figur 2 gezeigten Schaltstellung den Masseanschluss 7 mit der Spannungsquelle 81b für ein Testpotential. In seiner in Figur 2 nicht gezeigten Schaltstellung verbindet das Schaltelement 6b den Masseanschluss 7 mit den Kondensatoren 5a und 5b, wobei diese Verbindung noch durch das Schaltelement 6a vermittelt wird.

Die Diagnosemittel 8 umfassen neben den Spannungsquellen 81a und 81b für die Testpotentiale zusätzlich Mittel 82a, 82b zur Überwachung dieser Testpotentiale, die in diesem Beispiel als Analog-Digital-Wandler mit Vorwiderständen realisiert sind. Jede der vier Kombinationen von Schaltzuständen der Schaltelemente 6a und 6b führt nominell zu einer eindeutigen Kombination von Spannungswerten, die durch die Analog-Digital-Wandler 82a, 82b registriert werden. Auf diese Weise können die tatsächlichen Schaltzustände der Schaltelemente 6a und 6b ermittelt werden.

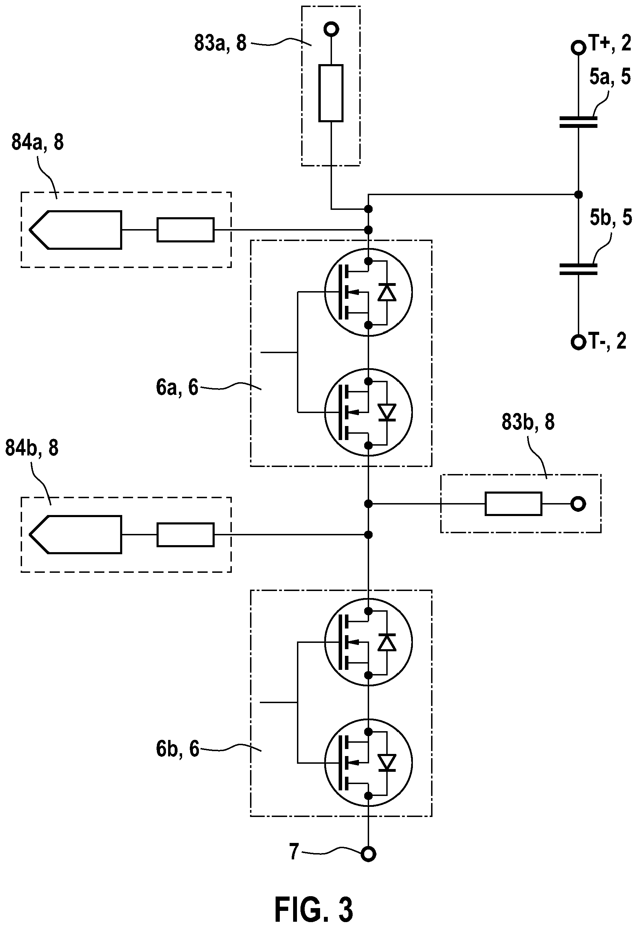

In dem in Figur 3 gezeigten Ausführungsbeispiel ist ebenfalls eine Reihenschaltung aus zwei Schaltelementen 6a, 6b zwischen den Kondensatoren 5a, 5b und dem Masseanschluss 7 vorgesehen. Im Unterschied zu Figur 2 sind die Schaltelemente 6a, 6b jedoch jeweils als antiserielle Schaltung zweier MOSFET-Transistoren realisiert. Derartige Schaltelemente wirken nicht, wie die Relais in Figur 2, als Umschalter, sondern können nur, entsprechend der Darstellung des Schaltelements 6 in Figur 1, entweder auf Durchgang oder auf Unterbrechung geschaltet sein. Daher sind die Diagnosemittel 8 hier anders organisiert. Auf der dem Masseanschluss 7 abgewandten Seite eines jeden der Schaltelemente 6a, 6b speist eine Spannungsquelle 83a, 83b jeweils über einen Vorwiderstand eine Testspannung ein. Über Mittel 84a, 84b wird dort jeweils das Potential überwacht. Auf diese Weise lässt sich feststellen, ob zwischen den Mitteln 84a, 84b und dem Masseanschluss 7 jeweils Durchgang besteht.

## Patentansprüche

1. Spannungswandler (1) zur Wandlung zwischen einer Gleichspannung an einem Gleichspannungstor (2) und einer ein- oder mehrphasigen Wechselspannung an einem Wechselspannungstor (3) durch zeitliche Taktung eines elektronischen Schaltwerks (4), über das jede Phase (3a-3c) des Wechselspannungstors (3) wahlweise mit dem Pluspol oder mit dem Minuspol des Gleichspannungstors (2) verbindbar ist, wobei der Pluspol, und/oder der Minuspol, des Gleichspannungstors (2) über mindestens einen Kondensator (5, 5a, 5b) mit einem Masseanschluss (7) verbunden ist, wobei der Masseanschluss (7) mit einer externen Masse (7a) verbindbar ist und wobei die Verbindung zwischen dem Kondensator (5, 5a, 5b) und dem Masseanschluss (7) über mindestens ein Schaltelement (6, 6a, 6b) geführt ist
wobei
Diagnosemittel (8) vorgesehen sind, die dazu ausgebildet sind, die korrekte Funktion, und/oder den tatsächlichen Schaltzustand, mindestens eines Schaltelements (6, 6a, 6b) zu erfassen
**dadurch gekennzeichnet, dass**
die Diagnosemittel (8) eine Spannungsquelle (83a, 83b), die mit der dem Masseanschluss (7) abgewandten Seite mindestens eines Schaltelements (6, 6a, 6b) verbunden ist, und Mittel (84a, 84b) zur Überwachung des Potentials auf dieser Seite des Schaltelements (6, 6a, 6b) umfassen.

2. Spannungswandler (1) nach Anspruch 1, wobei der Spannungswandler (1) dazu ausgebildet ist, mit dem Schaltelement (6, 6a, 6b) die Verbindung zwischen dem Kondensator (5, 5a, 5b) und dem Masseanschluss (7) zu unterbrechen, wenn auf den Spannungswandler (1) eine Beschleunigungs- oder Verzögerungskraft wirkt, die einen vorgegebenen Schwellwert überschreitet.

3. Spannungswandler (1) nach Anspruch 1, wobei der Spannungswandler (1) dazu ausgebildet ist, mit dem Schaltelement (6, 6a, 6b) die Verbindung zwischen dem Kondensator (5, 5a, 5b) und dem Masseanschluss (7) herzustellen, wenn ein an das Wechselspannungstor (3) des Spannungswandlers (1) angeschlossener Verbraucher aktiviert wird, und die Verbindung wieder zu trennen, wenn der Verbraucher deaktiviert wird.

4. Spannungswandler (1) nach einem der Ansprüche 1 bis 3, wobei das Schaltelement (6, 6a, 6b) eine Anordnung aus mindestens zwei Transistoren umfasst, wobei die Transistoren Bipolartransistoren und/oder Feldeffekttransistoren umfassen und wobei die durch die jeweilige Kollektor-Emitter-Strecke, bzw. durch die jeweilige Source-Drain-Strecke, definierten Durchlassrichtungen der Transistoren antiseriell zueinander geschaltet sind.

5. Spannungswandler (1) nach einem der Ansprüche 1 bis 4, wobei die Verbindung zwischen dem Kondensator (5, 5a, 5b) und dem Masseanschluss (7) über eine Reihenschaltung aus mehreren Schaltelementen (6a, 6b) geführt ist.

6. Spannungswandler (1) nach einem der vorhergehenden Ansprüche, wobei mindestens ein Schaltelement (6, 6a, 6b) als Umschalter zwischen einer ersten Schaltstellung und einer zweiten Schaltstellung ausgebildet ist, wobei das Schaltelement (6, 6a, 6b) den Masseanschluss (7), oder ein zwischen dieses Schaltelement (6, 6a, 6b) und den Masseanschluss (7) geschaltetes weiteres Schaltelement (6, 6a, 6b), in der ersten Schaltstellung mit einer Spannungsquelle (81a, 81b) für ein Testpotential und in der zweiten Schaltstellung mit dem Kondensator (5, 5a, 5b) verbindet und wobei die Diagnosemittel (8) Mittel (82a, 82b) zur Überwachung des Testpotentials umfassen.

7. Spannungswandler (1) nach einem der Ansprüche 1 bis 6, wobei der Kondensator (5, 5a, 5b) eine Kapazität von mindestens 500 nF, bevorzugt von mindestens 1 µF und ganz besonders bevorzugt von mindestens 10 µF aufweist.

8. Elektrischer Antriebsstrang (10) für ein Kraftfahrzeug (100), umfassend einen Spannungswandler (1) nach einem der Ansprüche 1 bis 7 sowie einen mit dem Wechselspannungstor (3) des Spannungswandlers (1) verbundenen Elektromotor (11).

9. Kraftfahrzeug (100) mit einem elektrischen Antriebsstrang (10) nach Anspruch 8, wobei der Elektromotor (11) und der Masseanschluss (7) des Spannungswandlers (1) mit einer gemeinsamen Masse (110) des Kraftfahrzeugs (100) verbunden sind.

10. Kraftfahrzeug (100) nach Anspruch 9, weiterhin umfassend eine wiederaufladbare Batterie (120) zur Speisung des Antriebsstrangs (10) sowie eine Sicherheitseinrichtung (130), die dazu ausgebildet ist, in Antwort auf eine Feststellung durch Diagnosemittel (8) des Spannungswandlers (1), dass auf Grund einer Fehlfunktion eines oder mehrerer Schaltelemente (6, 6a, 6b) die Verbindung zwischen dem Kondensator (5, 5a, 5b) und dem Masseanschluss (7) des Spannungswandlers (1) nicht unterbrochen werden kann, das Aufladen der Batterie (120) aus einer fahrzeugexternen Energiequelle (200) zu unterbinden.

11. Kraftfahrzeug (100) nach Anspruch 9, weiterhin umfassend eine Sicherheitseinrichtung (135), die dazu ausgebildet ist, in Antwort auf eine Feststellung durch Diagnosemittel (8) des Spannungswandlers (1), dass auf Grund einer Fehlfunktion eines oder mehrerer Schaltelemente (6, 6a, 6b) die Verbindung zwischen dem Kondensator (5, 5a, 5b) und dem Masseanschluss (7) des Spannungswandlers (1) nicht hergestellt werden kann, eine Warnung an den Fahrer auszugeben und nach Ablauf einer vorgegebenen Fahrstrecke oder Zeit eine erneute Inbetriebnahme des Kraftfahrzeugs (100) zu unterbinden, und/oder die Drehzahl und/oder das Drehmoment des Elektromotors (11) einzuschränken.

## Claims

1. Voltage converter (1) for converting between a DC voltage at a DC voltage gate (2) and a single-phase or multiphase AC voltage at an AC voltage gate (3) as a result of temporal clocking of an electronic switching mechanism (4) via which each phase (3a-3c) of the AC voltage gate (3) can be selectively connected to the positive pole or to the negative pole of the DC voltage gate (2), wherein the positive pole and/or the negative pole of the DC voltage gate (2) are/is connected to an earth terminal (7) via at least one capacitor (5, 5a, 5b), wherein the earth terminal (7) can be connected to an external earth (7a), and wherein the connection between the capacitor (5, 5a, 5b) and the earth terminal (7) is routed via at least one switching element (6, 6a, 6b),
wherein
diagnosis means (8) that are designed to detect the correct function and/or the actual switching state of at least one switching element (6, 6a, 6b) are provided,
**characterized in that**
the diagnosis means (8) comprise a voltage source (83a, 83b) that is connected to that side of at least one switching element (6, 6a, 6b) that is facing away from the earth terminal (7) and means (84a, 84b) for monitoring the potential on this side of the switching element (6, 6a, 6b).

2. Voltage converter (1) according to Claim 1, wherein the voltage converter (1) is designed to interrupt the connection between the capacitor (5, 5a, 5b) and the earth terminal (7) using the switching element (6, 6a, 6b) when an acceleration force or deceleration force that exceeds a predefined threshold value acts on the voltage converter (1).

3. Voltage converter (1) according to Claim 1, wherein the voltage converter (1) is designed to establish the connection between the capacitor (5, 5a, 5b) and the earth terminal (7) using the switching element (6, 6a, 6b) when a consumer connected to the AC voltage gate (3) of the voltage converter (1) is activated, and to disconnect the connection again when the consumer is deactivated.

4. Voltage converter (1) according to one of Claims 1 to 3, wherein the switching element (6, 6a, 6b) comprises an arrangement composed of at least two transistors, wherein the transistors comprise bipolar transistors and/or field-effect transistors and wherein the forward directions, defined by the respective collector-emitter path or by the respective source-drain path, of the transistors are connected in antiseries to one another.

5. Voltage converter (1) according to one of Claims 1 to 4, wherein the connection between the capacitor (5, 5a, 5b) and the earth terminal (7) is routed via a series circuit composed of multiple switching elements (6a, 6b).

6. Voltage converter (1) according to one of the preceding claims, wherein at least one switching element (6, 6a, 6b) is designed as a changeover switch between a first switching position and a second switching position, wherein the switching element (6, 6a, 6b) connects the earth terminal (7), or a further switching element (6, 6a, 6b) connected between this switching element (6, 6a, 6b) and the earth terminal (7), to a voltage source (81a, 81b) for a test potential in the first switching position and to the capacitor (5, 5a, 5b) in the second switching position, and wherein the diagnosis means (8) comprise means (82a, 82b) for monitoring the test potential.

7. Voltage converter (1) according to one of Claims 1 to 6, wherein the capacitor (5, 5a, 5b) has a capacitance of at least 500 nF, preferably of at least 1 µF and very particularly preferably of at least 10 µF.

8. Electrical drivetrain (10) for a motor vehicle (100), comprising a voltage converter (1) according to one of Claims 1 to 7 and an electric motor (11) connected to the AC voltage gate (3) of the voltage converter (1).

9. Motor vehicle (100) having an electrical drivetrain (10) according to Claim 8, wherein the electric motor (11) and the earth terminal (7) of the voltage converter (1) are connected to a common earth (110) of the motor vehicle (100).

10. Motor vehicle (100) according to Claim 9, further comprising a rechargeable battery (120) for supplying the drivetrain (10) and a safety device (130) that is designed to prevent charging of the battery (120) from an energy source (200) external to the vehicle in response to diagnosis means (8) of the voltage converter (1) determining that the connection between the capacitor (5, 5a, 5b) and the earth terminal (7) of the voltage converter (1) cannot be interrupted due to a malfunction of one or more switching elements (6, 6a, 6b).

11. Motor vehicle (100) according to Claim 9, further comprising a safety device (135) that is designed to output a warning to the driver and to prevent restarting of the motor vehicle (100) after a predefined driving distance or time has elapsed and/or to restrict the rotational speed and/or the torque of the electric motor (11) in response to diagnosis means (8) of the voltage converter (1) determining that the connection between the capacitor (5, 5a, 5b) and the earth terminal (7) of the voltage converter (1) cannot be established due to a malfunction of one or more switching elements (6, 6a, 6b) .

## Revendications

1. Convertisseur de tension (1) pour la conversion entre une tension continue au niveau d'une porte de tension continue (2) et une tension alternative monophasée ou polyphasée au niveau d'une porte de tension alternative (3) par la synchronisation temporelle d'un mécanisme de commutation (4) par lequel chaque phase (3a-3c) de la porte de tension alternative (3) peut être reliée au choix au pôle positif ou au pôle négatif de la porte de tension continue (2), dans lequel le pôle positif et/ou le pôle négatif de la porte de tension continue (2) est/sont relié(s) à une borne de masse (7) par l'intermédiaire d'au moins un condensateur (5, 5a, 5b), dans lequel la borne de masse (7) peut être reliée à une masse externe (7a), et dans lequel la liaison entre le condensateur (5, 5a, 5b) et la borne de masse (7) passe par au moins un élément de commutation (6, 6a, 6b),
dans lequel
des moyens de diagnostic (8) sont prévus qui sont réalisés pour détecter le bon fonctionnement et/ou l'état de commutation réel d'au moins un élément de commutation (6, 6a, 6b),
**caractérisé en ce que**
les moyens de diagnostic (8) comprennent une source de tension (83a, 83b) qui est reliée au côté, détourné de la borne de masse (7), d'au moins un élément de commutation (6, 6a, 6b), et des moyens (84a, 84b) pour surveiller le potentiel dudit côté de l'élément de commutation (6, 6a, 6b).

2. Convertisseur de tension (1) selon la revendication 1, dans lequel le convertisseur de tension (1) est réalisé pour couper la liaison entre le condensateur (5, 5a, 5b) et la borne de masse (7) à l'aide de l'élément de commutation (6, 6a, 6b) si une force d'accélération ou de temporisation qui dépasse une valeur seuil prédéfinie agit sur le convertisseur de tension (1).

3. Convertisseur de tension (1) selon la revendication 1, dans lequel le convertisseur de tension (1) est réalisé pour établir à l'aide de l'élément de commutation (6, 6a, 6b) une liaison entre le condensateur (5, 5a, 5b) et la borne de masse (7) si un consommateur connecté à la porte de tension alternative (3) du convertisseur de tension (1) est activé, et pour déconnecter la liaison lorsque le consommateur est désactivé.

4. Convertisseur de tension (1) selon l'une quelconque des revendications 1 à 3, dans lequel l'élément de commutation (6, 6a, 6b) comprend un agencement d'au moins deux transistors, dans lequel les transistors comprennent des transistors bipolaires et/ou des transistors à effet de champ, et dans lequel les sens passants des transistors, définis par le trajet collecteur-émetteur respectif ou par le trajet source-drain respectif, sont montés de manière antisérielle.

5. Convertisseur de tension (1) selon l'une quelconque des revendications 1 à 4, dans lequel la liaison entre le condensateur (5, 5a, 5b) et la borne de masse (7) passe par un montage série composé de plusieurs éléments de commutation (6a, 6b).

6. Convertisseur de tension (1) selon l'une quelconque des revendications précédentes, dans lequel au moins un élément de commutation (6, 6a, 6b) est réalisé sous forme de commutateur entre une première position de commutation et une deuxième position de commutation, dans lequel l'élément de commutation (6, 6a, 6b) relie la borne de masse (7) ou un élément de commutation supplémentaire (6, 6a, 6b) connecté entre ledit élément de commutation (6, 6a, 6b) et la borne de masse (7) dans la première position de commutation à une source de tension (81a, 81b) pour un potentiel d'essai et dans la deuxième position de commutation au condensateur (5, 5a, 5b), et dans lequel les moyens de diagnostic (8) comprennent des moyens (82a, 82b) pour surveiller le potentiel d'essai.

7. Convertisseur de tension (1) selon l'une quelconque des revendications 1 à 6, dans lequel le condensateur (5, 5a, 5b) présente une capacité d'au moins 500 nF, de préférence d'au moins 1 µF, et de manière particulièrement préférée d'au moins 10 µF.

8. Chaîne cinématique électrique (10) pour un véhicule automobile (100), comprenant un convertisseur de tension (1) selon l'une quelconque des revendications 1 à 7, ainsi qu'un moteur électrique (11) relié à la porte de tension alternative (3) du convertisseur de tension (1).

9. Véhicule automobile (100), comprenant une chaîne cinématique électrique (10) selon la revendication 8, dans lequel le moteur électrique (11) et la borne de masse (7) du convertisseur de tension (1) sont reliés à une masse commune (110) du véhicule automobile (100).

10. Véhicule automobile (100) selon la revendication 9, comprenant en outre une batterie rechargeable (120) pour alimenter la chaîne cinématique (10) ainsi qu'un dispositif de sécurité (130) qui est réalisé pour empêcher la recharge de la batterie (120) à partir d'une source d'énergie externe au véhicule (200) en réponse à une constatation par des moyens de diagnostic (8) du convertisseur de tension (1) qu'en raison un dysfonctionnement d'un ou de plusieurs éléments de commutation (6, 6a, 6b) la liaison entre le condensateur (5, 5a, 5b) et la borne de masse (7) du convertisseur de tension (1) ne peut pas être coupée.

11. Véhicule automobile (100) selon la revendication 9, comprenant en outre un dispositif de sécurité (135) qui, en réponse à une constatation par des moyens de diagnostic (8) du convertisseur de tension (1) qu'en raison un dysfonctionnement d'un ou de plusieurs éléments de commutation (6, 6a, 6b) la liaison entre le condensateur (5, 5a, 5b) et la borne de masse (7) du convertisseur de tension (1) ne peut pas être établie, est réalisé pour émettre une alarme à l'intention du conducteur, et au terme d'un trajet prédéfini ou d'un délai prédéfini, pour empêcher une remise en service du véhicule automobile (100) et/ou pour limiter la vitesse de rotation et/ou le couple du moteur électrique (11).
